(19) Europäisches Patentamt
European Patent Office
Office européen des brevets

(11) **EP 4 704 325 A1**

(12) **EUROPÄISCHE PATENTANMELDUNG**

(43) Veröffentlichungstag:
**04.03.2026 Patentblatt 2026/10**

(51) Internationale Patentklassifikation (IPC):
**H02P 6/15** (2016.01)    **H02P 6/182** (2016.01)

(21) Anmeldenummer: 25191158.2

(52) Gemeinsame Patentklassifikation (CPC):
**H02P 6/182; H02P 6/157**

(22) Anmeldetag: **23.07.2025**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **27.08.2024 LU 103362**

(71) Anmelder: **Miele & Cie. KG**
**33332 Gütersloh (DE)**

(72) Erfinder:
• **Rodehüser, Tobias**
**59329 Wadersloh (DE)**
• **Neufeld, Alexander**
**33619 Bielefeld (DE)**

(54) **ANSTEUERUNG EINES MINDESTENS DREIPHASIGEN BÜRSTENLOSEN GLEICHSTROMMOTORS**

(57)    Die Erfindung betrifft ein Verfahren zur Ansteuerung eines mindestens dreiphasigen bürstenlosen Gleichstrommotors (2), bevorzugt ohne Rotorlagesensor, umfassend:
• (100) Bestromen von zwei Phasen (U, V, W), wobei die Spannung des Bestromens mittels PWM-Steuerung eingestellt wird;
• (200) Ermitteln der induzierten Spannung $\Delta U$ einer nicht bestromten Phase (U, V, W);
• (400) Bestimmen der Spannungsdifferenz zwischen der induzierten Spannung $\Delta U$ und einer Referenzspannung $\Delta U_{ref}$, wobei die Referenzspannung $\Delta U_{ref}$ ungleich Null ist,
• (500) Anpassen der PWM-Frequenz, falls die Spannungsdifferenz ungleich Null ist, wobei

∘ die PWM-Frequenz erhöht wird, falls Spannungsdifferenz bei positivem Nulldurchgang der induzierten Spannung $\Delta U < 0$; oder Spannungsdifferenz bei negativem Nulldurchgang der induzierten Spannung $\Delta U > 0$; und

∘ die PWM-Frequenz verringert wird, falls Spannungsdifferenz bei positivem Nulldurchgang der induzierten Spannung $\Delta U > 0$; oder Spannungsdifferenz bei negativem Nulldurchgang der induzierten Spannung $\Delta U < 0$.

FIG. 2

**Beschreibung**

Die Erfindung betrifft ein Verfahren zum Ansteuern eines mindestens dreiphasigen bürstenlosen Gleichstrommotors gemäß dem Patentanspruch 1, eine Ansteuerungsvorrichtung zum Ansteuern eines mindestens dreiphasigen bürstenlosen Gleichstrommotors gemäß dem Patentanspruch 7, einen eines mindestens dreiphasigen bürstenlosen Gleichstrommotor mit einer derartigen Ansteuerungsvorrichtung gemäß dem Patentanspruch 13 sowie ein Haushaltsgerät mit mindestens einem derartigen mindestens dreiphasigen bürstenlosen Gleichstrommotors gemäß dem Patentanspruch 15.

Zu den elektrischen Antrieben gehören die Synchronmotoren als Einphasen- oder Drehstrom-Synchronmaschinen im Motorbetrieb. Der Rotor bzw. der Läufer weist eine konstante Magnetisierung auf, welche im Betrieb synchron von einem bewegten magnetischen Drehfeld im Stator mitgenommen wird, woraus sich die Dreh- bzw. Rotationsbewegung des Rotors innerhalb des Stators bzw. Ständers ergibt. Mit anderen Worten wird die, üblicherweise dreisträngige, Drehstromwicklung des Stators durch eine geeignete Schaltung derart angesteuert, dass seitens der Spulen des Stators ein wanderndes magnetisches Feld erzeugt wird, welches den Rotor mitzieht und hierdurch in Rotation versetzt. Die Dreh- bzw. Rotationsbewegung des Rotors des laufenden Synchronmotors ist dabei synchron zur Wechselspannung der Wicklungen des Stators. Die Drehzahl der Drehbewegung des Rotors ist über die Polpaarzahl der Wicklungen des Stators mit der Frequenz der Wechselspannung verknüpft.

Das magnetische Feld des Rotors kann zum einen im Betrieb mittels elektromagnetischer Fremderregung erzeugt werden, wozu wenigstens eine Feldspule seitens des Rotors erforderlich ist, welche über Schleifringe während der Drehbewegung elektrisch kontaktiert werden muss, um Strom vom Stator auf den drehenden Rotor zu übertragen. Dies führt zu einem erhöhten Aufwand. Auch kann sich die elektrische Kontaktierung, welche üblicherweise über Bürsten ausgeführt wird, im Laufe der Zeit abnutzen. Ferner kann es an den Bürstenenden zur Funkenbildung kommen.

Zum anderen kann das magnetische Feld des Rotors durch Permanentmagnete erzeugt werden, was als Selbsterregung bezeichnet wird. In diesem Fall kann auf die elektrische Kontaktierung zwischen Stator und Rotor verzichtet werden. Dies kann die zuvor genannten Nachteile vermeiden sowie insgesamt das Gewicht, den Bauraum und die Kosten derartiger permanenterregter Synchronmotoren geringhalten. Derartige permanenterregte Synchronmotoren mit einer schaltenden Elektronik werden daher üblicherweise auch als bürstenlose Motoren (Englisch: Brushless direct current motor - kurz: BLDC-Motor) bezeichnet. Die Spulenstränge des Stators können über einen Vierquadrantensteller angesteuert werden. Die Elektronik zur Ansteuerung der Brücke ist ein geregelter Frequenzumrichter. Üblicherweise werden bürstenlose Motoren dreiphasig ausgebildet, da sie dann den Vorteil einer definierten Läuferstellung bei hoher Dynamik, hohem Drehmoment und hoher Effizienz aufweisen.

Charakteristisch für bürstenlose Motoren ist ihre Kommutierung, welche zum Beispiel bei einem dreiphasigen Stator aus sechs Blöcken bzw. Sektoren pro Drehfelddurchlauf, d.h. pro Motorumdrehung, besteht, welche sich jeweils vom Schaltzustand der Brückenschaltung unterscheiden. Dabei sind immer lediglich zwei Gegentaktstufen der Brücke aktiv und die dritte Gegentaktstufe befindet sich im Zustand "floating". Die Spannung an diesem Brückenpunkt wird durch das Schaltungsnetz gemäß dem Stern-Ersatzschaltbild definiert. Die Brückensteuerung sorgt dafür, dass immer die Motorphase "floating" ist, welche - bei trapezoider Gegenspannung - gerade die Polarität wechselt. Somit werden bei einem BLDC-Motor, anders als bei den unter dem Begriff permanenterregte Synchron-Maschinen (PMSM) oder PMAC bekannten Motoren, jeweils nur zwei Phasen von drei Phasen gleichzeitig bestromt; die dritte Phase ist stromlos.

Da die Brückensteuerung automatisch weiterschaltet, befindet sich das Statorfeld immer in dem Block mit der optimalen Magnetflussänderung, d.h. mit der maximalen Generatorspannung. Der bürstenlose Motor dreht somit hoch, bis seine Generatorspannung der Versorgungsspannung entspricht. Dann ist die maximale Drehzahl bzw. die Betriebsdrehzahl erreicht und wird konstant gehalten. Eine Steuerung bzw. Änderung der Drehzahl des Rotors kann somit über die Änderung der Versorgungsspannung erfolgen. Dabei ist die Auswahl der zu bestromenden Phasen von der Rotorlage abhängig. Der Übergang von einem Sektor zum nächsten Sektor wird auch "elektronische Kommutierung" genannt, deswegen auch die Bezeichnung "brushless" oder "elektronisch kommutiert".

Die für die Kommutierung eines BLDC-Motors notwendige Information über die Rotorlage bzw. über die Rotorposition wird üblicherweise über einen Lagesensor wie beispielsweise Hall-Sensoren, Resolver oder Inkrementalgeber gemessen, was jedoch zu einem entsprechenden zusätzlichen Aufwand bzw. zu entsprechenden Kosten führt sowie Bauraum erfordert.

Alternativ kann daher eine sensorlose Kommutierung umgesetzt und auf Positionssensoren verzichtet werden, indem die aktuelle Rotorposition indirekt durch die Messung von elektrischen Parametern an den Spulen gewonnen wird. Hierzu kann beispielsweise die in den Spulen des Stators ausgelöste EMK (elektromotorische Kraft) erfasst und von der elektronischen Steuerschaltung ausgewertet werden, was jedoch erst ab einer gewissen Mindestdrehzahl erfolgen kann.

Aus dem Stand der Technik sind verschiedene Lösungen bekannt, die diese Kommutierung ohne einen Lagesensor erlauben. Der am meisten verbreitete Ansatz der sensorlosen Ansteuerung basiert darauf, die Rotorlage und die Kommutierungszeitpunkte durch Messung der induzierten Spannung in der inaktiven Phase zu ermitteln. Die Spannungspotenziale der Motorphase und des Motorsternpunkts werden über Spannungsteiler miteinander verglichen und der Nullübergang wird als Referenzzeitpunkt für die Kommutierung genommen.

Bei bürstenlosen Motoren, bei denen der Sternpunkt nicht physikalisch herausgeführt ist (etwa bei einer Dreieck-Schaltung), kann ein Sternpunkt künstlich durch drei in Stern geschaltete Widerstände nachgebildet werden. Das Spannungspotential des künstlichen Sternpunkts wird dann anschließend mit dem Spannungspotential der inaktiven Phase, zum Beispiel über einen Komparator, verglichen. Der Nulldurchgang dieser Differenz wird als Referenzzeitpunkt für die Kommutierung genommen.

Bei einem optimal kommutierten bürstenlosen Motor sollen der Phasenstrom und die EMK (Elektro-Motorische Kraft, also die induzierte Phasenspannung) in Phase sein, dann ist der Arbeitspunkt mit der höchsten dem höchsten Wirkungsgrad des Motors erreicht. Dieses Kriterium bedeutet, dass der Nulldurchgang der EMK einer Phase etwa in der Mitte des stromlosen Intervalls erfolgen soll (unter der Annahme einer kleinen Verzögerung zwischen Spannung und Strom in der Phase). Bei der herkömmlichen Ansteuerung ist dies nicht ohne Weiteres gegeben.

Die DE 10 2017 117 109 A1 beschreibt ein Verfahren zur Ansteuerung eines mindestens dreiphasigen bürstenlosen Motors, bevorzugt ohne Rotorlagesensor, umfassend:

- Bestromen von zwei Phasen, wobei die Spannung des Bestromens mittels PWM-Steuerung eingestellt wird;

- Ermitteln der induzierten Spannung einer nicht bestromten Phase;

- Anpassen der PWM-Frequenz, falls die induzierte Spannung ungleich Null ist, wobei

    o die PWM-Frequenz erhöht wird, falls die induzierte Spannung bei positivem Nulldurchgang < 0; oder die induzierte Spannung bei negativem Nulldurchgang > 0; und
    o die PWM-Frequenz verringert wird, falls die induzierte Spannung bei positivem Nulldurchgang > 0; oder die induzierte Spannung bei negativem Nulldurchgang < 0.

Somit wird die induzierte Spannung verwendet, um auf den Zustand der Kommutierung zu schließen. Abhängig davon kann über die Änderung der PWM-Frequenz entsprechend geregelt werden, um den Nulldurchgang der induzierten Spannung bzw. der elektromotorischen Kraft mit der Mitte des stromlosen Intervalls zu synchronisieren. Damit werden Phasenstrom und EMK in Phase gehalten und das Verhältnis der Leistung zum Stromeffektivwert wird maximiert.

Mit anderen Worten wird bei dem sensorlosen Regelungsverfahren der DE 10 2017 117 109 A1 der Kommutierungszeitpunkt bzw. die Ermittlung der Rotorposition durch Messung einer Phasenspannung und der Sternpunktspannung ermittelt und aus der Differenz dieser beiden Spannungen wird die induzierte Spannung berechnet. Im normalen Betrieb sollte die induzierte Spannung gleich Null sein, d.h. die Kommutierung erfolgt synchron zum Nulldurchgang der induzierten Spannung. Die Phasenregelschleife (PLL) der DE 10 2017 117 109 A1 synchronisiert die PWM-Frequenz mit der Motordrehzahl anhand der Spannungsdifferenz als induzierte Spannung und regelt somit die Spannungsdifferenz zum Abtastzeitpunkt auf Null.

Nachteilig ist hierbei jedoch, dass sich die Phasenspannung und die Sternpunktspannung nur messen lassen, wenn der Strom in der Phase bereits abgeklungen ist. Das Regelungsverfahren der DE 10 2017 117 109 A1 basiert schließlich darauf, dass die Spannungen immer in der Mitte des stromlosen Sektors gemessen werden. Bei hohen Leistungen des Motors kann es jedoch vorkommen, dass der Phasenstrom nicht bis zum Messzeitpunkt in der Mitte des Sektors abgeklungen ist.

Das Regelungsverfahren der DE 10 2017 117 109 A1 kann somit bei relativ hohen Strömen bzw. bei relativ hohen Leistungen nicht mehr eingesetzt werden bzw. muss der Strom bzw. die Leistung begrenzt werden. Dies kann insbesondere bei geringen Spannungen von Akkumulatoren auftreten.

Der Erfindung stellt sich das Problem, ein Verfahren zum Ansteuern eines mindestens zweiphasigen bürstenlosen Motors der eingangs beschriebenen Art bereitzustellen, welches ohne Rotorlagesensor umgesetzt werden kann und die Nachteile bekannter Regelungen bzw. Ansteuerungen vermeidet oder zumindest reduziert. Insbesondere soll der Messzeitpunkt bei hohen Leistungen bzw. bei hohen Phasenströmen innerhalb des stromlosen Intervalls verschoben werden können, um die Phasenspannung und der Sternpunktspannung bei abgeklungenem Strom erfassen. Dies soll vorzugsweise möglichst einfach, bauraumsparend, energiesparend und bzw. oder kostengünstig umgesetzt werden. Zumindest soll eine Alternative zu bekannten derartigen Verfahren geschaffen werden.

Erfindungsgemäß wird dieses Problem durch ein Verfahren mit den Merkmalen des Patentanspruchs 1, durch eine Ansteuerungsvorrichtung mit den Merkmalen des Patentanspruchs 7, durch einen mindestens dreiphasigen bürstenlosen Gleichstrommotor mit den Merkmalen des Patentanspruchs 13 sowie durch ein Haushaltsgerät mit den Merkmalen des Patentanspruchs 15 gelöst. Vorteilhafte Ausgestaltungen und Weiterbildungen der Erfindung ergeben sich aus den nachfolgenden Unteransprüchen.

Somit betrifft die Erfindung ein Verfahren zur Ansteuerung eines mindestens dreiphasigen bürstenlosen Gleichstrommotors, bevorzugt ohne Rotorlagesensor, umfassend:

- Bestromen von zwei Phasen, wobei die Spannung des Bestromens mittels PWM-Steuerung eingestellt wird;

- Ermitteln der induzierten Spannung $\Delta U$ einer nicht bestromten Phase;

- Bestimmen der Spannungsdifferenz zwischen der induzierten Spannung $\Delta U$ und einer Referenzspannung $\Delta U_{ref}$, wobei die Referenzspannung $\Delta U_{ref}$ ungleich Null ist;

- Anpassen der PWM-Frequenz, falls die Spannungsdifferenz ungleich Null ist, wobei

    o die PWM-Frequenz erhöht wird, falls

        die Spannungsdifferenz bei positivem Nulldurchgang der induzierten Spannung $\Delta U < 0$; oder

        die Spannungsdifferenz bei negativem Nulldurchgang der induzierten Spannung $\Delta U > 0$

    und

    o die PWM-Frequenz verringert wird, falls

        die Spannungsdifferenz bei positivem Nulldurchgang der induzierten Spannung $\Delta U > 0$; oder

        die Spannungsdifferenz bei negativem Nulldurchgang der induzierten Spannung $\Delta U < 0$.

Erfindungsgemäß wird weiterhin, d.h. wie aus der DE 10 2017 117 109 A1 bekannt, die induzierte Spannung $\Delta U$ verwendet, um auf den Zustand der Kommutierung zu schließen.

Abhängig davon kann über die Änderung der PWM-Frequenz entsprechend geregelt werden, um den Nulldurchgang der induzierten Spannung $\Delta U$ bzw. der elektromotorischen Kraft (EMK) mit der Mitte des stromlosen Intervalls zu synchronisieren. Damit werden Phasenstrom und EMK in Phase gehalten und das Verhältnis der Leistung zum Stromeffektivwert wird maximiert.

Erfindungsgemäß müssen nicht unbedingt alle Phasen in der beschriebenen Weise gemessen werden. Je nach Anwendung genügt es, nur eine einzige Phase zu messen. Es ist möglich, nur eine Phase, einen Teil der Phasen oder alle Phasen zu messen.

Erfindungsgemäß wird ferner die Spannungsdifferenz zwischen der induzierten Spannung $\Delta U$ und

einer Referenzspannung $\Delta U_{ref}$, welche ungleich Null ist, bestimmt, so dass das grundsätzliche Vorgehen bzw. Verfahren, wie aus der DE 10 2017 117 109 A1 bekannt, auch dann angewendet werden kann, falls der Strom in der entsprechenden Phase zum Zeitpunkt des Messens bzw. des Abgreifens der Spannungswerte noch nicht abgeklungen ist.

Gemäß einem Aspekt der Erfindung ist der Wert der Referenzspannung $\Delta U_{ref}$ vorbestimmt und konstant. Dies kann eine besonders einfache Art und Weise der Umsetzung darstellen, wenngleich dies voraussetzt, dass der vorbestimmte und feste Wert der Referenzspannung $\Delta U_{ref}$ passend gewählt wird.

Gemäß einem weiteren Aspekt der Erfindung weist das Verfahren den weiteren Schritt auf:

- Bestimmen des Wertes der Referenzspannung $\Delta U_{ref}$ basierend auf der zeitlichen Verschiebung und auf Motorparametern, wobei die induzierte Spannung $\Delta U$ vorzugsweise einen sinusförmigen Verlauf aufweist.

Hierdurch kann auf die Verwendung eines vorbestimmten und konstanten Wertes der Referenzspannung $\Delta U_{ref}$ verzichtet werden, um die entsprechenden Nachteile zu vermeiden. Vielmehr kann der Wert der Referenzspannung $\Delta U_{ref}$ veränderlich sein, um sich den Umständen des Betriebs des Gleichstrommotors anzupassen, was die Qualität des Betriebs des Gleichstrommotors verbessern kann.

Gemäß einem weiteren Aspekt der Erfindung wird die zeitliche Verschiebung basierend auf dem aktuellen Verschiebewinkel auf der Sinusfunktion der induzierten Spannung $\Delta U$ und auf der aktuellen Drehzahl bestimmt. Dies kann eine konkrete Möglichkeit der Umsetzung darstellen.

Gemäß einem weiteren Aspekt der Erfindung wird die zeitliche Verschiebung basierend auf dem aktuellen Verschiebewinkel auf der Sinusfunktion der induzierten Spannung $\Delta U$ und interpolierten Werten, vorzugsweise basierend auf einer Look-Up-Tabelle, bestimmt. Dies kann eine weitere konkrete Möglichkeit der Umsetzung darstellen.

Gemäß einem weiteren Aspekt der Erfindung wird die zeitliche Verschiebung basierend auf einer Geradengleichung angenähert. Dies kann eine weitere alternative konkrete Möglichkeit der Umsetzung darstellen.

Gemäß einem weiteren Aspekt der Erfindung umfasst das Ermitteln der induzierten Spannung $\Delta U$:

- Messen der induzierten Spannung $\Delta U$ gegenüber einem Referenzpotenzial, wobei das Referenzpotenzial bevorzugt das Potenzial eines Sternpunkts des Motors ist.

Gemäß einem weiteren Aspekt der Erfindung erfolgt das Ermitteln der induzierten Spannung der nicht bestromten Phase im Wesentlichen mittig in Bezug auf das stromlose Intervall.

Gemäß einem weiteren Aspekt der Erfindung ist der Zeitpunkt des Ermittelns der induzierten Spannung von der PWM-Ansteuerung abgeleitet.

Gemäß einem weiteren Aspekt der Erfindung ist die PWM-Frequenz ein ganzzahliges, bevorzugt ungeradzahliges Vielfaches der elektrischen Frequenz.

Diese Ausführungsform ermöglicht eine sehr einfache Handhabung der PWM-Frequenz bzw. elektrischen Frequenz. Insbesondere im Falle eines ungeradzahligen Vielfachen kann der Triggerzeitpunkt für das Ermitteln sehr einfach abgeleitet werden, da hier immer ein PWM-Puls mittig in Bezug auf das stromlose Intervall liegt. Von diesem Puls kann dann einfach der Triggerzeitpunkt abgeleitet werden.

Gemäß einem weiteren Aspekt der Erfindung umfasst das Verfahren weiter

- Erhöhen des ganzzahligen Vielfachen, falls die PWM-Frequenz einen vorgegebenen Minimalwert unterschreitet; und/oder

- Verringern des ganzzahligen Vielfachen, falls die PWM-Frequenz einen vorgegebenen Maximalwert unterschreitet.

Die PWM-Frequenz kann nicht beliebig variiert werden. Bei zu hohen Frequenzen kommt es zu inakzeptablen Verlusten, bei zu niedrigen Frequenzen kann der Stromripple zu stark werden, was zu unangenehmer Geräuschentwicklung führen kann. Daher wird gemäß dieser Ausführungsform eine minimale/maximale Frequenz vorgegeben, bevorzugt ein Fenster für die Frequenz. Bei Überschreiten von Schwellenwerten wird das Vielfache angepasst, damit die Frequenz wiederum innerhalb des Fensters bzw. unterhalb/oberhalb der Schwellenwerte bleiben kann.

Die vorliegende Erfindung betrifft auch ei eine Ansteuerschaltung für einen mindestens dreiphasigen bürstenlosen Gleichstrommotor ohne Rotorlagesensor bereitgestellt, umfassend:

- eine Steuereinheit, die zum Bestromen von zwei Phasen eingerichtet ist, wobei die Spannung des Bestromens mittels PWM-Steuerung eingestellt wird; und

- eine Abtasteinrichtung, die zum Ermitteln der induzierten Spannung $\Delta U$ einer nicht bestromten Phase eingerichtet ist;

  wobei die Ansteuerschaltung eingerichtet ist, die Spannungsdifferenz zwischen der induzierten Spannung $\Delta U$ und einer Referenzspannung $\Delta U_{ref}$ zu bestimmen, wobei die Referenzspannung $\Delta U_{ref}$ ungleich Null ist,

wobei die Steuereinheit eingerichtet ist zum Anpassen der PWM-Frequenz, falls die Spannungsdifferenz ungleich Null ist, wobei

  o die PWM-Frequenz erhöht wird, falls

    die Spannungsdifferenz bei positivem Nulldurchgang der induzierten Spannung $\Delta U < 0$; oder

    die Spannungsdifferenz bei negativem Nulldurchgang der induzierten Spannung $\Delta U > 0$

  und

  o die PWM-Frequenz verringert wird, falls

    die Spannungsdifferenz bei positivem Nulldurchgang der induzierten Spannung $\Delta U > 0$; oder

    die Spannungsdifferenz bei negativem Nulldurchgang der induzierten Spannung $\Delta U < 0$.

Mittels einer derartigen Ansteuerschaltung kann das erfindungsgemäße Verfahren wie zuvor beschrieben umgesetzt werden.

Gemäß einem Aspekt der Erfindung ist der Wert der Referenzspannung $\Delta U_{ref}$ vorbestimmt und konstant.

Gemäß einem weiteren Aspekt der Erfindung ist die Ansteuerschaltung weiter eingerichtet, den Wert der Referenzspannung $\Delta U_{ref}$ basierend auf der zeitlichen Verschiebung und auf Motorparametern zu bestimmen, wobei die induzierte Spannung $\Delta U$ vorzugsweise einen sinusförmigen Verlauf aufweist.

Gemäß einem weiteren Aspekt der Erfindung wird die zeitliche Verschiebung basierend auf dem aktuellen Verschiebewinkel auf der Sinusfunktion der induzierten Spannung $\Delta U$ und auf der aktuellen Drehzahl bestimmt.

Gemäß einem weiteren Aspekt der Erfindung wird die zeitliche Verschiebung basierend auf dem aktuellen Verschiebewinkel auf der Sinusfunktion der induzierten Spannung $\Delta U$ und interpolierten Werten, vorzugsweise basierend auf einer Look-Up-Tabelle, bestimmt.

Gemäß einem weiteren Aspekt der Erfindung wird die zeitliche Verschiebung basierend auf einer Geradengleichung angenähert.

Gemäß einem weiteren Aspekt der Erfindung umfasst die Ansteuerschaltung weiter

- einen Mikrokontroller, der dazu eingerichtet ist, der Abtasteinrichtung ein Triggersignal zum Ausführen des Ermittelns der induzierten Spannung ☐U bereitzustellen, wobei das Triggersignal im Wesentlichen mittig in Bezug auf das stromlose Intervall ausgegeben wird.

Gemäß einem weiteren Aspekt der Erfindung ist der Mikrokontroller dazu eingerichtet, das Triggersignal von der PWM-Ansteuerung abzuleiten.

Gemäß einem weiteren Aspekt der Erfindung ist die Steuereinheit weiter dazu eingerichtet ist, das Verhältnis von PWM-Frequenz und elektrischer Frequenz des Motors so einzustellen, dass die PWM-Frequenz ein ganzzahliges, bevorzugt ungeradzahliges Vielfaches der elektrischen Frequenz ist.

Gemäß einem weiteren Aspekt der Erfindung ist die Steuereinheit weiter dazu eingerichtet:

•   das ganzzahlige Vielfache zu erhöhen, falls die PWM-Frequenz einen vorgegebenen Minimalwert unterschreitet; und/oder

•   das ganzzahlige Vielfache zu verringern, falls die PWM-Frequenz einen vorgegebenen Maximalwert unterschreitet.

Die vorliegende Erfindung betrifft ferner einen bürstenlosen Gleichstrommotor mit mindestens drei Phasen und bevorzugt ohne Rotorlagesensor, umfassend eine Ansteuerschaltung wie vorstehend beschrieben.

Gemäß einem Aspekt der Erfindung umfasst der bürstenlose Gleichstrommotor weiter einen Sternpunkt zur Messung der induzierten Spannung.

Gemäß einem weiteren Aspekt der Erfindung

•   sind die Phasen in Sternschaltung mit dem Sternpunkt verbunden;
oder

•   ist der Sternpunkt ein künstlich nachgebildeter Sternpunkt.

Die vorliegende Erfindung betrifft des Weiteren ein Haushaltsgerät, umfassend einen Motor wie vorstehend beschrieben. Das Haushaltsgerät kann beispielsweise ein Staubsauger sein, andere Geräte kommen jedoch ebenso in Frage.

Ein Ausführungsbeispiel der Erfindung ist in den Zeichnungen rein schematisch dargestellt und wird nachfolgend näher beschrieben. Es zeigt

Figur 1    eine Schaltung eines erfindungsgemäßen bürstenlosen Gleichstrommotors;
Figur 2    zeitliche Verläufe der drei Phasen sowie der entsprechenden induzierten Phasenspannung des erfindungsgemäßen bürstenlosen Gleichstrommotors; und
Figur 3    ein Ablaufdiagramm eines erfindungsgemäßen Verfahrens.

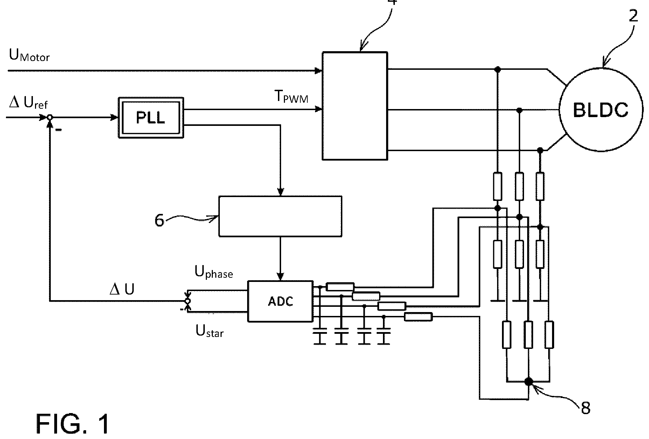

Figur 1 zeigt eine Ausführungsform der Erfindung in Form eines Blockschaltbildes. Ein bürstenloser Motor (BLDC-Motor) 2 ist mit einer Steuereinheit 4 verbunden. Die Steuereinheit 4 stellt die Kommutierung des Motors 2 bereit. Die Spannung, die an die Phasen U, V, W des Motors 2 angelegt wird, wird mittels Pulsweitenmodulation bzw. PWM-Steuerung eingestellt. Die Steuereinheit 4 übernimmt die Erzeugung der PWM-Steuerung.

Der Motor 2 kann beispielsweise mit einer üblichen (nicht gezeigten) Schaltung mit insgesamt sechs Leistungsschaltern (zwei pro Phase) angesteuert werden, wobei die Steuereinheit 4 dann die Halbbrücken in einem entsprechenden Muster ansteuert, d.h. die Highside- und Lowside-Transistoren einer jeweiligen Phase U, V, W entsprechend öffnet bzw. schließt. Es wird hier und im Folgenden von einer Ansteuerung ausgegangen, bei der jeweils eine Phase U, V, W bestromt wird, während zwei Phasen U, V, W unbestromt bleiben.

Eine Abtasteinheit ADC, beispielsweise ein Analog-Digital-Wandler, ist einerseits mit dem Sternpunkt 8 und andererseits jeweils mit einer der drei Phasen U, V, W des Motors 2 verbunden. In der hier gezeigten Ausführungsform besitzt der Motor 2 einen künstlichen Sternpunkt 8, der das Referenzpotenzial für die Messung der induzierten Phasenspannung $\Delta U$ als Differenz der Phasenspannung $U_{Phase}$ und der Sternpunktspannung $U_{star}$ bereitstellt.

Diese Ausführung kann für Motoren ohne physikalischen Sternpunkt (etwa in Dreiecksschaltung) oder in Sternschaltung, aber ohne herausgeführten Sternpunkt, angewendet werden. Der künstliche Sternpunkt 8 wird mit passend gewählten Widerständen erzeugt. Alternativ kann bei Motoren in Sternschaltung der dort physikalisch vorhandene Sternpunkt verwendet werden, um hier die Referenzspannung abzugreifen.

Die Abtasteinheit ADC wird von einem Mikrocontroller 6 getriggert, um zu dem richtigen Zeitpunkt die induzierte Phasenspannung zu messen. Es ist dafür vorteilhaft, wenn die PWM-Frequenz ein ungeradzahliges Vielfaches der elektrischen Frequenz ist, da hier einfach der mittlere PWM-Puls während des stromlosen Intervalls der unbestromten Phase U, V, W gewählt werden kann, um gleichzeitig die Triggerung auszulösen.

Die induzierte Phasenspannung $\Delta U$ wird (in Bezug auf eine Referenzspannung $\Delta U Ref$) an die Steuereinheit 4 zurückgeführt. Die Messgröße $\Delta U$ wird als Rückführung über den Zustand der Kommutierung genutzt, um eine Art Phase Locked Loop (PLL, Phasenregelschleife) mit der Steuereinheit 4 zu bilden, deren Ziel es ist, den Nulldurchgang der EMK bzw. der induzierten Phasenspannung $\Delta U$ mit dem Zeitpunkt der Abtastung in der Mitte des stromlosen Intervalls zu synchronisieren. Damit wird erreicht, dass Phasenstrom und EMK in Phase gehalten werden. Die Steuereinheit 4 kann rein in Hardware oder zumindest teilweise in Software implementiert werden. Die PLL dient dazu, die Phasenlage und damit zusammenhängend die Frequenz eines veränderbaren Oszillators über einen geschlossenen Regelkreis so zu beeinflussen, dass die Phasenabweichung zwischen einem äußeren Referenzsignal und dem Oszillator oder einem daraus abgebildeten Signal möglichst konstant zu halten.

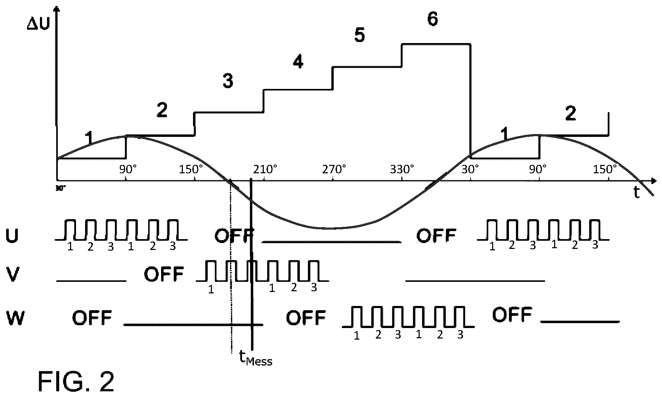

Figur 2 zeigt zeitliche Verläufe der drei Phasen U, V, W sowie der entsprechenden induzierten Phasenspannung $\Delta U$.

In der Figur 2 sind die sechs Sektoren des Motors 2 im BLDC-Betrieb, die Ansteuerung der drei Phasen und die induzierte Phasenspannung $\Delta U$ in Phase U zu erkennen. Der Messzeitpunkt $t_{Mess}$ ist in der Mitte von Sektor 3 zu erkennen. Ebenso könnte der Nulldurchgang der induzierten Phasenspannung $\Delta U$ auch in Sektor 6 gemessen werden oder aber in den anderen beiden Phasen V, W in den jeweiligen Sektoren.

Zur Ermittlung der induzierten Phasenspannung $\Delta U$ wird erfindungsgemäß die Phasenspannung $U_{phase}$ und die Sternpunktspannung $U_{star}$ gleichzeitig in der Mitte von Sektor 3 gemessen, wie aus der DE 10 2017 117 109 A1 bekannt. Die Phase V wird dabei weiter getaktet. Es wird bei der bisher eingesetzten BLDC-Regelung der DE 10 2017 117 109 A1 allerdings kein Block (1 Puls pro Sektor) auf den Motor 2 gegeben, sondern eine ungerade Anzahl von Blöcken N ($N \geq 3$). In der Mitte vom mittleren Block werden dann die Phasenspannung $U_{phase}$ und die Sternpunktspannung $U_{star}$ gemessen. Die induzierte Phasenspannung $\Delta U$ ergibt sich dann als Differenz der Phasenspannung $U_{phase}$ und der Sternpunktspannung $U_{star}$. Bei N = 3 wird demnach im zweiten Puls gemessen, bei N=5 wird demnach im dritten Puls gemessen usw.

Für die Messung der Phasenspannung $U_{Phase}$ muss dabei der Phasenstrom in der Messphase (hier Phase U) abgeklungen sein, ansonsten sind die Spannungen nicht messbar. Bei hohen Leistungen kommt es hingegen vor, dass der Phasenstrom noch nicht abgeklungen ist, weshalb erfindungsgemäß der Messzeitpunkt $t_{Mess}$ als Abtastzeitpunkt verschoben wird. Erfindungsgemäß wird dann im letzten Puls gemessen, also bei N = 3 wird in der Mitte vom dritten Puls gemessen, bei N = 5 in der Mitte vom fünften Puls.

Damit der Kommutierungszeitpunkt nicht verschoben wird, wird erfindungsgemäß ferner auf eine induzierte Phasenspannung $\Delta U$ von ungleich 0 geregelt. Der Sollwert für die Spannung der PLL, d.h. die Referenzspannung $\Delta U_{ref}$, wird somit entsprechend angepasst. Zur Ermittlung des Sollwerts sind unterschiedliche Verfahren denkbar:

Regelung auf einen konstanten Wert ungleich Null Bestimmung eines Werts an Hand der zeitlichen Verschiebung und der Motorparameter. Die induzierte Spannung hat idealerweise einen sinusförmigen Verlauf. Dabei kann die Sollspannung mit Hilfe der zeitlichen Verschiebung wie folgt ermittelt werden:

Der Wert auf der Sinusfunktion wird konkret ermittelt aus der aktuellen Drehzahl und dem Verschiebungswinkel

$$\Delta U_{ref} = n \, K_{Bemf} \, \sin(0° + \Delta\varphi)$$

mit

$K_{Bemf}$ = Motorkonstante
$\Delta\varphi$ = Verschiebewinkel
n = Drehzahl

Es wird eine Look-Up Tabelle mit den Sinuswerten hinterlegt und zwischen den Werten interpoliert und mit dem Verschiebungswinkel als Eingangsgröße

$$\Delta U_{ref} = n \, K_{Bemf} \, LUT(\Delta\varphi)$$

mit
LUT = Look-Up Tabelle

Da die Verschiebung des Abtastzeitpunktes um den Nulldurchgang erfolgt, kann die Sollspannung über eine Geradengleichung approximiert werden.

$$\Delta U_{ref} = n \, K_{Bemf} \, m\Delta\varphi$$

mit
m = Konstante Steigung

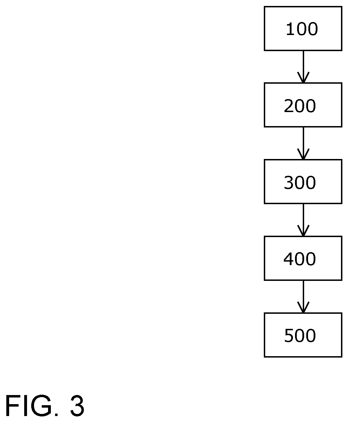

Figur 3 zeigt ein Ablaufdiagramm eines erfindungsgemäßen Verfahrens, welches mittels einer erfindungsgemäßen Ansteuerschaltung auf den erfindungsgemäßen Gleichstrommotor 2 der Figur 1 angewendet wird.

Somit erfolgt ein Bestromen 100 von zwei Phasen U, V, W, wobei die Spannung des Bestromens mittels PWM-Steuerung eingestellt wird. Es erfolgt ein Ermitteln 200 der induzierten Spannung $\Delta U$ einer nicht bestromten Phase U, V, W. Es erfolgt ein Bestimmen 300 des Wertes der Referenzspannung $\Delta U_{ref}$ basierend auf der zeitlichen Verschiebung und auf Motorparametern, wobei die induzierte Spannung $\Delta U$ einen sinusförmigen Verlauf aufweist. Der Wert der Referenzspannung $\Delta U_{ref}$ kann dabei vorbestimmt und konstant sein oder im Rahmen des Verfahrens bestimmt werden, wie zuvor beschrieben.

In jedem Fall erfolgt dann ein Bestimmen 400 der Spannungsdifferenz zwischen der induzierten Spannung $\Delta U$ und einer Referenzspannung $\Delta U_{ref}$, wobei die Referenzspannung $\Delta U_{ref}$ ungleich Null ist. Dann erfolgt ein Anpassen 500 der PWM-Frequenz, falls die Spannungsdifferenz ungleich Null ist, wobei die PWM-Frequenz erhöht wird, falls die Spannungsdifferenz bei positivem Nulldurchgang der induzierten Spannung $\Delta U < 0$, oder die Spannungsdifferenz bei negativem Nulldurchgang der induzierten Spannung $\Delta U > 0$, und die PWM-Frequenz verringert wird, falls die Spannungsdifferenz bei positivem Nulldurchgang der induzierten Spannung $\Delta U > 0$ oder die Spannungsdifferenz bei negativem Nulldurchgang der induzierten Spannung $\Delta U < 0$.

**Bezugszeichenliste (Bestandteil der Beschreibung)**

| | |
|---|---|
| U | Phase U |
| V | Phase V |
| W | Phase W |

$U_{Phase}$ Phasenspannung
$U_{Star}$ Sternpunktspannung
$\Delta U$ induzierte Spannung; induzierte Phasenspannung; Spannungsdifferenz
$\Delta U_{ref}$ Referenzspannung bzw. Sollspannung der induzierten Phasenspannung $\Delta U$
$U_{MOTOR}$ Motorspannung

$T_{PWM}$ Takt der Pulsweitenmodulation
t Zeit
$t_{Mess}$ Messzeitpunkt; Abtastzeitpunkt

ADC Abtasteinheit
PLL Phasenregelschleife; Phase Locked Loop
2 dreiphasiger bürstenloser Gleichstrommotor; BLDC-Motor
4 Steuerungseinheit; Rechner; geregelter Frequenzumrichter
6 Microcontroller
8 Sternpunkt

100 Bestromen von zwei Phasen U, V, W
200 Ermitteln der induzierten Spannung $\Delta U$ einer nicht bestromten Phase U, V, W
300 Bestimmen des Wertes der Referenzspannung $\Delta U_{ref}$
400 Bestimmen der Spannungsdifferenz zwischen der induzierten Spannung $\Delta U$ und einer Referenzspannung $\Delta U_{ref}$
500 Anpassen der PWM-Frequenz, falls die Spannungsdifferenz ungleich Null ist

**Patentansprüche**

1. Verfahren zur Ansteuerung eines mindestens dreiphasigen bürstenlosen Gleichstrommotors (2), bevorzugt ohne Rotorlagesensor, umfassend:

   • (100) Bestromen von zwei Phasen (U, V, W), wobei die Spannung des Bestromens mittels PWM-Steuerung eingestellt wird;
   • (200) Ermitteln der induzierten Spannung $\Delta U$ einer nicht bestromten Phase (U, V, W);
   • (400) Bestimmen der Spannungsdifferenz zwischen der induzierten Spannung $\Delta U$ und einer Referenzspannung $\Delta U_{ref}$, wobei die Referenzspannung $\Delta U_{ref}$ ungleich Null ist,
   • (500) Anpassen der PWM-Frequenz, falls die Spannungsdifferenz ungleich Null ist, wobei

   o die PWM-Frequenz erhöht wird, falls

   die Spannungsdifferenz bei positivem Nulldurchgang der induzierten Spannung $\Delta U < 0$; oder
   die Spannungsdifferenz bei negativem Nulldurchgang der induzierten Spannung $\Delta U > 0$;

   und
   ∘ die PWM-Frequenz verringert wird, falls

   die Spannungsdifferenz bei positivem Nulldurchgang der induzierten Spannung $\Delta U > 0$; oder
   die Spannungsdifferenz bei negativem Nulldurchgang der induzierten Spannung $\Delta U < 0$.

2. Verfahren nach Anspruch 1, wobei der Wert der Referenzspannung $\Delta U_{ref}$ vorbestimmt und konstant ist.

3. Verfahren nach Anspruch 1, weiter umfassend:

   • (300) Bestimmen des Wertes der Referenzspannung $\Delta U_{ref}$ basierend auf der zeitlichen Verschiebung und auf Motorparametern, wobei die induzierte Spannung $\Delta U$ vorzugsweise einen sinusförmigen Verlauf aufweist.

4. Verfahren nach Anspruch 3, wobei die zeitliche Verschiebung basierend auf dem aktuellen Verschiebewinkel auf der Sinusfunktion der induzierten Spannung $\Delta U$ und auf der aktuellen Drehzahl bestimmt wird.

5. Verfahren nach Anspruch 3, wobei die zeitliche Verschiebung basierend auf dem aktuellen Verschiebewinkel auf der Sinusfunktion der induzierten Spannung $\Delta U$ und interpolierten Werten, vorzugsweise basierend auf einer Look-Up-Tabelle, bestimmt wird.

6. Verfahren nach Anspruch 3, wobei die zeitliche Verschiebung basierend auf einer Geradengleichung angenähert wird.

7. Ansteuerschaltung für einen mindestens dreiphasigen bürstenlosen Gleichstrommotor (2) ohne Rotorlagesensor, umfassend:

   • eine Steuereinheit (4), die zum Bestromen von zwei Phasen (U, V, W) eingerichtet ist, wobei die Spannung des Bestromens mittels PWM-Steuerung eingestellt wird; und
   • eine Abtasteinrichtung (ADC), die zum Ermitteln der induzierten Spannung $\Delta U$ einer nicht

bestromten Phase (U, V, W) eingerichtet ist; wobei die Ansteuerschaltung eingerichtet ist, die Spannungsdifferenz zwischen der induzierten Spannung ΔU und einer Referenzspannung ΔUref zu bestimmen, wobei die Referenzspannung ΔUref ungleich Null ist, wobei die Steuereinheit (4) eingerichtet ist zum Anpassen der PWM-Frequenz, falls die Spannungsdifferenz ungleich Null ist, wobei

    o die PWM-Frequenz erhöht wird, falls

        die Spannungsdifferenz bei positivem Nulldurchgang der induzierten Spannung ΔU < 0; oder
        die Spannungsdifferenz bei negativem Nulldurchgang der induzierten Spannung ΔU > 0;

    und
    ◦ die PWM-Frequenz verringert wird, falls

        die Spannungsdifferenz bei positivem Nulldurchgang der induzierten Spannung ΔU > 0; oder
        die Spannungsdifferenz bei negativem Nulldurchgang der induzierten Spannung ΔU < 0.

8. Ansteuerschaltung nach Anspruch 7, wobei der Wert der Referenzspannung $\Delta U_{ref}$ vorbestimmt und konstant ist.

9. Ansteuerschaltung nach Anspruch 7, welche weiter eingerichtet ist, den Wert der Referenzspannung $\Delta U_{ref}$ basierend auf der zeitlichen Verschiebung und auf Motorparametern zu bestimmen, wobei die induzierte Spannung ΔU vorzugsweise einen sinusförmigen Verlauf aufweist.

10. Ansteuerschaltung nach Anspruch 9, wobei die zeitliche Verschiebung basierend auf dem aktuellen Verschiebewinkel auf der Sinusfunktion der induzierten Spannung ΔU und auf der aktuellen Drehzahl bestimmt wird.

11. Ansteuerschaltung nach Anspruch 9, wobei die zeitliche Verschiebung basierend auf dem aktuellen Verschiebewinkel auf der Sinusfunktion der induzierten Spannung ΔU und interpolierten Werten, vorzugsweise basierend auf einer Look-Up-Tabelle, bestimmt wird.

12. Ansteuerschaltung nach Anspruch 9, wobei die zeitliche Verschiebung basierend auf einer Geradengleichung angenähert wird.

13. Bürstenloser Gleichstrommotor (2) mit mindestens drei Phasen (U, V, W) und bevorzugt ohne Rotorlagesensor, umfassend eine Ansteuerschaltung nach einem der Ansprüche 7 bis 12.

14. Bürstenloser Gleichstrommotor (2) nach Anspruch 13, weiter umfassend einen Sternpunkt (8) zur Messung der induzierten Spannung ΔU. wobei vorzugsweise

    • die Phasen (U, V, W) in Sternschaltung mit dem Sternpunkt (8) verbunden sind; oder
    • der Sternpunkt (8) ein künstlich nachgebildeter Sternpunkt (8) ist.

15. Haushaltsgerät, umfassend einen Gleichstrommotor (2) nach einem der Ansprüche 13 oder 14.

FIG. 1

FIG. 2

```
┌──────────┐
│   100    │
└──────────┘
     │
     ▼
┌──────────┐
│   200    │
└──────────┘
     │
     ▼
┌──────────┐
│   300    │
└──────────┘
     │
     ▼
┌──────────┐
│   400    │
└──────────┘
     │
     ▼
┌──────────┐
│   500    │
└──────────┘
```

FIG. 3

Europäisches
Patentamt

European
Patent Office

Office européen
des brevets

**EUROPÄISCHER RECHERCHENBERICHT**

Nummer der Anmeldung

EP 25 19 1158

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2016/254766 A1 (BROWN WARD R [US]) 1. September 2016 (2016-09-01) * Absätze [0034], [0032], [0059]; Abbildung 1 * * Absatz [0008] * ----- | 1-3,7-9, 13-15 | INV. H02P6/15 H02P6/182 |
| Y,D | DE 10 2017 117109 A1 (MIELE & CIE [DE]) 31. Januar 2019 (2019-01-31) * Absätze [0007], [0004], [0025] * ----- | 1-3,7-9, 13-15 | |

| RECHERCHIERTE SACHGEBIETE (IPC) |
|---|
| H02P |

Der vorliegende Recherchenbericht wurde für alle Patentansprüche erstellt

| Recherchenort | Abschlußdatum der Recherche | Prüfer |
|---|---|---|
| München | 10. Dezember 2025 | Schürle, Patrick |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 19 1158

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-12-2025

| Im Recherchenbericht angeführtes Patentdokument | Datum der Veröffentlichung | Mitglied(er) der Patentfamilie | | Datum der Veröffentlichung |
|---|---|---|---|---|
| US 2016254766 A1 | 01-09-2016 | CN | 107112931 A | 29-08-2017 |
| | | EP | 3262749 A1 | 03-01-2018 |
| | | JP | 2018508171 A | 22-03-2018 |
| | | KR | 20170120562 A | 31-10-2017 |
| | | TW | 201633693 A | 16-09-2016 |
| | | US | 2016254766 A1 | 01-09-2016 |
| | | WO | 2016138415 A1 | 01-09-2016 |
| DE 102017117109 A1 | 31-01-2019 | KEINE | | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017117109 A1